# EUROPEAN PATENT SPECIFICATION

(11) **EP 3 450 502 B1**
(45) Date of publication and mention of the grant of the patent: **09.06.2021**
(21) Application number: 17789467.2
(22) Date of filing: 24.04.2017
(51) Int. Cl.: C08L 71/02, C08K 3/22, C08K 5/57, C08G 65/26, C08G 65/336

(54) **CURABLE COMPOSITION OF THERMOSETTING TYPE**
HÄRTBARE DUROPLASTISCHE ZUSAMMENSETZUNG
COMPOSITION DURCISSABLE DE TYPE THERMODURCISSABLE

(30) Priority: 27.04.2016 JP 2016089136; 05.08.2016 JP 2016154323
(43) Date of publication of application: 06.03.2019
(73) Proprietor: Kaneka Corporation, Osaka-shi, Osaka 530-8288 (JP)
(72) Inventor: OGAWA, Akira, Takasago-shi Hyogo 676-8688 (JP); YANO, Ayako, Takasago-shi Hyogo 676-8688 (JP)
(74) Representative: Vossius & Partner Patentanwälte Rechtsanwälte mbB
(86) International application number: PCT/JP2017/016217
(87) International publication number: WO 2017/188185

(56) References cited:
- WO-A1-2013/042702
- WO-A1-2016/027471
- JP-A- H11 172 230
- JP-A- 2001 031 870
- JP-A- 2001 031 870
- JP-A- 2003 041 115
- JP-A- 2005 306 891
- JP-A- 2006 321 938
- JP-A- 2010 189 542
- US-A1- 2014 288 222

## Description

### TECHNICAL FIELD

The present invention relates to a thermosetting type curable composition which contains a polymer having a hydrolyzable silyl group.

### BACKGROUND ART

A polymer having a hydrolyzable silyl group is known as a moisture-reactive polymer and is included in many industrial products such as adhesives, sealing materials, coating materials, paints, or cohesives and used in wide range of applications.

As for the type of a hydrolyzable silyl group, a methyldimethoxysilyl group or a trimethoxysilyl group has been mainly used. That is because an organic polymer having a methyldimethoxysilyl group exhibits a favorable behavior that, under a circumstance in which a curing catalyst does not exist, the organic polymer remains stable over a long period of time without having any reaction of a silyl group even in the co-presence of moisture and, upon mixing with a curing catalyst, a progress of a curing reaction is exhibited from that moment. Furthermore, since a trimethoxysilyl group is a functional group which has higher activity than a methyldimethoxysilyl group, it is suitable for a use in which rapid curing is required.

However, for an industrial use, there is a case in which, after adhering a substrate with an adhesive or applying a sealing material to fill gaps in a substrate, either immediately thereafter or after curing, the substrate is applied with a paint of thermosetting type followed by heating. In that case, the curable composition which contains a polymer having a hydrolyzable silyl group may have an occurrence of blisters due to air bubbles generated in a cured product during heating.

Meanwhile, it is also known that a polymer having a hydrolyzable silyl group is used as a thermosetting type, and a monoalkyl tin compound is used as a catalyst (Patent Documents 1 and 2). In that case, it is also known that, if a trimethoxysilyl group having high activity is used as a hydrolyzable silyl group, curing can be achieved at room temperature (Patent Document 3).

Furthermore, a moisture curable composition in which a polymer having a hydrolyzable silyl group and calcium oxide are used is known (Patent Documents 4 to 6), and use of calcium oxide for suppressing foaming of a resin of thermosetting type is also known (Patent Documents 7 to 9).

Patent Document 1: Japanese Unexamined Patent Application, Publication No. 2001-31870
Patent Document 2: Japanese Unexamined Patent Application, Publication No. 2006-321938
Patent Document 3: Japanese Unexamined Patent Application, Publication No. 2003-41115
Patent Document 4: Japanese Unexamined Patent Application, Publication No. 2011-127007
Patent Document 5: Japanese Unexamined Patent Application, Publication No. 2000-38502
Patent Document 6: Japanese Unexamined Patent Application, Publication No. 2003-55547
Patent Document 7: Japanese Unexamined Patent Application, Publication No. 2000-198906
Patent Document 8: Japanese Unexamined Patent Application, Publication No. 2010-132732
Patent Document 9: Japanese Unexamined Patent Application, Publication No. H06-16891

### DISCLOSURE OF THE INVENTION

### Problems to be Solved by the Invention

An object of the present invention is to provide a thermosetting type curable composition, the curable composition containing a polymer having a hydrolyzable silyl group, which does not cure over a long time at room temperature but cures immediately upon heating and a cured product of which is free from blisters even after a heating process.

### Means for Solving the Problems

To solve the problems above, the inventors of the present invention conducted intensive studies, and as a result, completed the following invention.

Namely, the present invention relates to the following:
(I) A thermosetting type curable composition comprising 100 parts by weight of a polyoxyalkylene-based polymer (A) having a hydrolyzable silyl group that is represented by the general formula (1)

   -Si(OR¹)₃ (1)

   (R¹s each independently represent a hydrocarbon group having 2 to 6 carbon atoms), and
   0.5 to 6 parts by weight of tetravalent monoalkyl tin (B).
(II) The present invention relates to the thermosetting type curable composition according to (I), further comprising 5 to 200 parts by weight of calcium oxide (C).
(III) The present invention relates to the thermosetting type curable composition according to (I) or (II), wherein the tetravalent monoalkyl tin (B) is 3 to 5 parts by weight.
(IV) The present invention relates to the thermosetting type curable composition according to (I) or (II), wherein the tetravalent monoalkyl tin (B) is 0.5 to 3 parts by weight.
(V) The present invention relates to the thermosetting type curable composition according to any one of (I) to (IV), wherein the tetravalent monoalkyl tin (B) is monobutyl tin carboxylate.
(VI) The present invention relates to the thermosetting type curable composition according to any one of (I) to (V), wherein R¹ in the general formula (1) is an ethyl group.
(VII) The present invention relates to the thermosetting type curable composition according to any one of (I) to (VI), wherein the curable composition is not curable when the curable composition right after production is kept in a sealed container for 1 week at 23°C.
(VIII) The present invention relates to the thermosetting type curable composition according to any one of (I) to (VII), wherein the curable composition cures at 120°C or higher.
(IX) The present invention relates to the thermosetting type curable composition according to any one of (I) to (VII), wherein the curable composition cures at 160°C or higher.
(X) The present invention relates to a method for producing a cured product comprising thermal curing by heating the thermosetting type curable composition according to any one of (I) to (VII) at 120°C or higher.
(XI) The present invention relates to a method for producing a cured product comprising thermal curing by heating the thermosetting type curable composition according to any one of (I) to (VII) at 160°C or higher.

### Effects of the Invention

The present invention provides a thermosetting type curable composition, the curable composition containing a polymer having a hydrolyzable silyl group, which does not cure over a long time at room temperature but cures immediately upon heating and a cured product of which is free from blisters even after a heating process.

### PREFERRED MODE FOR CARRYING OUT THE INVENTION

The present invention relates to a thermosetting type curable composition containing 100 parts by weight of a polyoxyalkylene-based polymer (A) having a hydrolyzable silyl group that is represented by the general formula (1)

-Si (OR¹)₃ (1)

(R¹s each independently represent a hydrocarbon group having 2 to 6 carbon atoms), and
0.5 to 6 parts by weight of tetravalent monoalkyl tin (B).

Hereinbelow, the "thermosetting type curable composition" is also simply described as a "curable composition". Furthermore, the "polyoxyalkylene-based polymer (A) having a hydrolyzable silyl group" is also simply described as a "polyoxyalkylene-based polymer (A)".

### <Polyoxyalkylene-based polymer (A)>

The curable composition contains the polyoxyalkylene-based polymer (A) having a hydrolyzable silyl group that is represented by the general formula (1)

-Si (OR¹)₃ (1)

(R¹s each independently represent a hydrocarbon group having 2 to 6 carbon atoms).
R¹ is a hydrocarbon group having 2 to 6 carbon atoms. Examples of R¹ include an alkyl group such as ethyl group, propyl group, isopropyl group, butyl group, isobutyl group, sec-butyl group, or tert-butyl group; and a cycloalkyl group such as cyclohexyl group, and it is preferably an ethyl group, a propyl group, or a butyl group, and more preferably an ethyl group. As R¹ in the general formula (1) is a hydrocarbon group having 2 to 6 carbon atoms, the curable composition can have stability over a long time at room temperature and also foaming can be suppressed when the curable composition is heated.

As for the a, it is preferably 0 from the viewpoint of having high activity.

Specific examples of the hydrolyzable silyl group include a triethoxysilyl group, a tripropoxysilyl group, a triisopropoxysilyl group, a tributyloxysilyl group, a triisobutyloxy silyl group, and a tritert-butyloxysilyl group, but not limited thereto. Among them, a triethoxysilyl group is preferable in that it exhibits even higher activity and allows obtainment of a cured product having favorable mechanical properties. From the viewpoint of the stability and safety, a triethoxysilyl group is more preferable.

Number of the hydrolyzable silyl groups to be contained in one molecule of the polyoxyalkylene-based polymer (A) is, on average, preferably 0.5 or more, more preferably 1.2 or more, and even more preferably 1.5 or more. The upper limit is preferably 4 or less, and more preferably 3 or less. For a case in which the polyoxyalkylene-based polymer (A) has a branched chain, number of the silyl groups is most preferably 1.8 to 3.0.

The main chain structure of the polyoxyalkylene-based polymer (A) can be a linear chain, or it can have a branched chain. The branched chain is preferable in that foaming can be suppressed.

Main chain of the polyoxyalkylene-based polymer (A) is a polymer which has a repeating unit represented by -R²-O- (in the formula, R² is a linear or branched alkylene group having 1 to 14 carbon atoms). R² is more preferably a linear or branched alkylene group having 2 to 4 carbon atoms. Specific examples of the repeating unit represented by -R²-O- include - CH₂O-, -CH₂CH₂O-, -CH₂CH(CH₃)O-, -CH₂CH(C₂H₅)O-, -CH₂C(CH₃)(CH₃)O-, and -CH₂CH₂CH₂CH₂O-. The main chain structure of the polyoxyalkylene-based polymer may be composed of only one kind of a repeating unit, or it may be composed of two or more kinds of a repeating unit. When the curable composition is used as a sealant, an adhesive, or the like, in particular, the main chain is preferably composed of a polyoxypropylene-based polymer which contains 50% by weight or more, and preferably 80% by weight or more of an oxypropylene repeating unit in the main chain structure of a polymer from the viewpoint of having amorphous property or relatively low viscosity, and it is more preferably composed of a polyoxypropylene-based polymer that is composed of polyoxypropylene only.

The polyoxyalkylene-based polymer (A) may have, among various main chain skeletons described above, any one kind of a main chain skeleton, or it may be a mixture of polymers with different main chain skeletons. Furthermore, it is also possible to prepare a mixture by mixing plural polymers which have been separately prepared, or to obtain a mixture by simultaneously preparing polymers so as to have arbitrary mixture composition.

As for the number average molecular weight of the polyoxyalkylene-based polymer (A), number average molecular weight obtained by GPC measurement is used. The number average molecular weight of the polyoxyalkylene-based polymer (A) is preferably 3,000 to 100,000, more preferably 3,000 to 50,000, and particularly preferably 3,000 to 30,000. If the number average molecular weight is less than 3,000, there can be a case in which the introduction amount of a reactive silicon group increases and it is inappropriate in terms of production cost. If the number average molecular weight is more than 100,000, there is a tendency that it is inappropriate in terms of operability due to high viscosity.

Molecular weight of the polyoxyalkylene-based polymer (A) can be expressed as a terminal group-converted molecular weight, which is obtained by measuring directly the terminal group concentration of an organic polymer precursor before introduction of a hydrolyzable silyl group based on titration analysis that is based on principles of a method of measuring a hydroxy value prescribed in JIS K 1557 and a method of measuring an iodine value prescribed in JIS K 0070, and taking into consideration the structure of an organic polymer (branch level set by an employed polymerization initiator). Number average molecular weight of the polyoxyalkylene-based polymer (A) can be also obtained by establishing a calibration curve of number average molecular weight obtained by GPC measurement and terminal group-converted molecular weight of an organic polymer precursor and converting the terminal group-converted molecular weight of an organic polymer precursor into the GPC number average molecular weight of the polyoxyalkylene-based polymer (A) having a hydrolyzable silyl group.

Molecular weight distribution (Mw/Mn) of the polyoxyalkylene-based polymer (A) is not particularly limited. The molecular weight distribution is preferably as narrow as possible. Specifically, the molecular weight distribution value is preferably less than 2.0, more preferably 1.6 or less, even more preferably 1.5 or less, still even more preferably 1.4 or less, and most preferably 1.3 or less. The molecular weight distribution of the polyoxyalkylene-based polymer (A) can be obtained from number average molecular weight obtained by GPC measurement and weight average molecular weight.

As for a preferred method for synthesizing the polyoxyalkylene-based polymer (A), the following methods (i) to (iii) can be mentioned.
(i) According to a method in which a double metal cyanide complex catalyst like zinc hexacyanocobaltate glyme complex is used and an epoxy compound is polymerized by an initiator having a hydroxyl group, a polyoxyalkylene-based polymer having a hydroxyl terminal is obtained. The hydroxyl group of obtained polyoxyalkylene-based polymer having a hydroxyl terminal is converted to a carbon-carbon unsaturated group. After that, a silane compound is added thereto via a hydrosilylation reaction.
(ii) A polyoxyalkylene-based polymer having a hydroxyl terminal is obtained in the same manner as (i).
   The obtained polyoxyalkylene-based polymer having a hydroxyl terminal is reacted with a compound which has both a group capable of reacting with a hydroxyl group and a hydrolyzable silyl group.
(iii) A polyoxyalkylene-based polymer having a hydroxyl terminal is obtained in the same manner as (i). By reacting the polyoxyalkylene-based polymer having a hydroxyl terminal with an excessive polyisocyanate compound, a polymer having an isocyanate group on the terminal is obtained, which is then reacted with a compound having both a group capable of reacting with an isocyanate group and a hydrolyzable silyl group.

Among the three methods described above, from the viewpoint of having a convenient reaction, controlling the introduction amount of a hydrolyzable silyl group, and having stable physical properties of a reactive silicon group-containing polymer to be obtained, the method (i) is more preferable.

Examples of the initiator having a hydroxyl group which is used for the methods (i) and (ii) include those having at least one hydroxyl group such as ethylene glycol, propylene glycol, glycerin, pentaerythritol, polypropylene glycol having low molecular weight, polyoxypropylene triol, allyl alcohol, polypropylene monoallyl ether, or polypropylene monoalkyl ether.

Examples of the epoxy compound which is used for the methods (i) and (ii) include alkylene oxides such as ethylene oxide or propylene oxide and glycidyl ethers such as methyl glycidyl ether or allyl glycidyl ether. Among them, propylene oxide is preferable.

Examples of the carbon-carbon unsaturated group which is used for the method (i) include a vinyl group, an allyl group, and a methallyl group. Among them, an allyl group is preferable.

As a method for converting a hydroxyl group to a carbon-carbon unsaturated group that is described in (i), it is preferable that a polymer containing hydroxyl terminal is reacted with an alkali metal salt, and then reacted with a halogenated hydrocarbon compound having a carbon-carbon unsaturated bond.

Examples of the halogenated hydrocarbon compound which is used for the method (i) include vinyl chloride, allyl chloride, methallyl chloride, vinyl bromide, allyl bromide, methallyl bromide, vinyl iodide, allyl iodide, and methallyl iodide. From the viewpoint of reactivity with a hydrosilane compound, allyl chloride and methallyl chloride are preferable.

As for the hydrosilane compound which is used for the method (i), triethoxysilane, diethoxymethylsilane, tripropoxysilane, dipropoxymethylsilane, (chloromethyl)diethoxysilane, (chloromethyl)dipropoxysilane, (methoxymethyl)diethoxysilane, (methoxymethyl)didipropoxysilane, (N,N-diethylaminomethyl)diethoxysilane, (N,N-diethylaminomethyl)dipropoxysilane, and the like can be used.

The hydrosilylation reaction used in the method (i) is accelerated by various catalysts. As for the hydrosilylation catalyst, known catalysts like various complexes of cobalt, nickel, iridium, platinum, palladium, rhodium, and ruthenium can be used. For example, a catalyst having platinum supported in a carrier like alumina, silica, or carbon black; chloroplatinic acid; a chloroplatinic acid complex composed of chloroplatinic acid and alcohol, aldehyde, or ketone; a platinum-olefin complex [for example, Pt(CH₂=CH₂)₂(PPh₃), Pt(CH₂=CH₂)₂Cl₂]; a platinum-vinylsiloxane complex [Pt{(vinyl)Me₂SiOSiMe₂(vinyl)}, Pt{Me(vinyl)SiO}₄]; a platinum-phosphine complex [Ph(PPh₃)₄, Pt(PBu₃)₄]; a platinum-phosphite complex [Pt{P(OPh)₃}₄], and the like can be used.

As for the compound which has both a group capable of reacting with a hydroxyl group and a hydrolyzable silyl group, which can be used for the method (ii), isocyanate silanes such as 3-isocyanatopropyltriethoxysilane or isocyanate methyltriethoxysilane; mercaptosilanes such as 3-mercaptopropyltriethoxysilane; and epoxysilanes such as 3-glycidoxypropyltriethoxysilane can be used.

As for the polyisocyanate compound which can be used for the method (iii), aromatic polyisocyanate such as toluene (tolylene) diisocyanate, diphenylmethane diisocyanate, or xylylene diisocyanate; and aliphatic polyisocyanate such as isophorone diisocyanate or hexamethylene diisocyanate can be mentioned.

As for the compound which has both a group capable of reacting with an isocyanate group and a hydrolyzable silyl group, which can be used for the method (iii), amino group-containing silanes such as γ-aminopropyltriethoxysilane, N-(β-aminoethyl)-γ-aminopropyltriethoxysilane, γ-(N-phenyl)aminopropyltriethoxysilane, N-ethylaminoisobutyltriethoxysilane, N-cyclohexylaminomethyltriethoxysilane, or N-cyclohexylaminomethyldiethoxymethylsilane; hydroxyl group-containing silanes such as γ-hydroxypropyltriethoxysilane; mercapto group-containing silanes such as γ-mercaptopropyltriethoxysilane; and the like can be mentioned.

### <Tetravalent monoalkyl tin (B)>

The curable composition contains the tetravalent monoalkyl tin (B).

Specific examples of the tetravalent monoalkyl tin (B) include a compound represented by the general formula (2) SnR³X₃ (2)
(in the formula, R³ represents a substituted or unsubstituted alkyl group having 1 to 20 carbon atoms. Xs are the same or different from one another and represent a ligand other than an alkyl group).

The alkyl group as R³ may be either linear or branched. Number of carbon atoms of the alkyl group is preferably 1 to 10. Examples of the substituent group include a halogen atom. Specific examples of R³ include a methyl group, an ethyl group, a butyl group, an octyl group, and a 2-ethylhexyl group, in which a butyl group and an octyl group are preferable, and a butyl group is more preferable.

X is not particularly limited as long as it is a ligand capable of coordinating to a tin atom other than R³. Specific examples thereof include a carbonic acid residue having 1 to 20 carbon atoms (preferably, having 1 to 10 carbon atoms), a dicarbonic acid monoester residue, an alkoxy silicate group, and a halogen group, but a carbonic acid residue is more preferable. Specific examples thereof include a carbonic acid residue such as acetic acid, propionic acid, butyric acid, valeric acid, pyvalic acid, octanoic acid, 2-ethylhexanoic acid, neodecanoic acid, lauric acid, stearic acid, or oleic acid; a dicarbonic acid monoester residue such as monoalkyl maleic acid; and an alkoxysilicate group such as a trimethoxysilicate group, a triethoxysilicate group, a tripropoxysilicate group, a tributoxysilicate group, a dimethoxymethylsilicate group, or a methoxydimethylsilicate group.

In the general formula (2), three Xs are included, but it is also possible that two or three of them bind to each other to form a ligand having coordination number of 2 or 3. For example, acetylacetone can be mentioned.

Specific examples of the tetravalent monoalkyl tin (B) include monoalkyl tin carboxylate such as monomethyl tin triacetate, monomethyl tin tripyvalate, monomethyl tin trioctoate, monomethyl tin tris(2-ethylhexanoate), monomethyl tin trineodecanoate, monomethyl tin trilaurate, monomethyl tin tristearate, monobutyl tin triacetate, monobutyl tin tripyvalate, monobutyl tin trioctoate, monobutyl tin tris(2-ethylhexanoate), monobutyl tin trineodecanoate, monobutyl tin trilaurate, monobutyl tin tristearate, monooctyl tin triacetate, monooctyl tin tripyvalate, monooctyl tin trioctoate, monooctyl tin tris(2-ethylhexanoate), monooctyl tin trineodecanoate, monooctyl tin trilaurate, monooctyl tin tristearate, or monolauryl tin triacetate; monoalkyl tin monoester malate such as monooctyl tin tris(butylmalate), or monobutyl tin tris(benzylmalate); monoalkyl tin alkoxy silicate such as monobutyl tin tris(triethoxysilicate), monobutyl tin tris(dimethoxymethylsilicate), or monooctyl tin tris(triethoxysilicate); and monoalkyl tin halide such as monomethyl tin trichloride, monobutyl tin trichloride, or monooctyl tin trichloride.

Among them, monoalkyl tin carboxylate is more preferable, monobutyl tin carboxylate is more preferable, and monobutyl tin tris(2-ethylhexanoate) is most preferable.

The tetravalent monoalkyl tin (B) may be used either singly or in combination of two or more types thereof.

Use amount of the tetravalent monoalkyl tin (B) is, relative to 100 parts by weight of the polyoxyalkylene-based polymer (A), 0.1 to 10 parts by weight, and from the viewpoint of a paint adhesion property, it is preferably 1 to 6 parts by weight, and more preferably 3 to 5 parts by weight. If it is higher than 10 parts by weight, stability at room temperature is impaired, and therefore undesirable. Furthermore, from the viewpoint of enhancing the storage stability, it is preferably 0.5 to 6 parts by weight, and more preferably 0.5 to 3 parts by weight. If it is less than 0.5 parts by weight, there may be a case in which sufficient curing is not obtained during thermal curing.

### <Calcium oxide (C)>

It is preferable that the curable composition contains calcium oxide (C). Even for the present invention in which curing occurs in the presence of moisture, calcium oxide can suppress foaming during thermal curing without delaying the curing.

Calcium oxide is not particularly limited.
For example, calcium oxide obtained by calcinizing, at 1000°C or higher, crudely-milled limestone can be used.

Use amount of the calcium oxide is, relative to 100 parts by weight of the polyoxyalkylene-based polymer (A), preferably 5 to 200 parts by weight, and more preferably 20 to 100 parts by weight. If it is less than 5 parts by weight, it becomes difficult to reduce the foaming, and if it is more than 200 parts by weight, physical properties of a cured product are impaired.

### <Other additives>

To the curable composition, as an additive other than the polyoxyalkylene-based polymer (A), a filler other than the component (C), an adhesiveness-imparting agent, a plasticizer, an anti-oxidant, a photostabilizer, and an UV absorbing agent may be added. Furthermore, a polymer having a hydrolyzable silyl group other than those based on polyoxyalkylene may be added. Examples of the polymer include an acrylic polymer and a saturated hydrocarbon-based polymer. Furthermore, the curable composition may be added with various additives, if necessary. Examples of the additives include a silanol condensation catalyst other than the component (B), a solvent, a diluent, an anti-sagging agent, a physical property modifying agent, a tackifier resin, a photocurable material, an oxygen-curable material, a surface property improving agent, an epoxy resin, other resins, a flame retardant, a curability modifying agent, a radical inhibitor, a metal inactivating agent, an ozone deterioration inhibitor, a phosphorus-based peroxide decomposing agent, a lubricating agent, a pigment, and an anti-fungal processing agent.

### <Filler other than component (C)>

The curable composition may be blended with various fillers other than the component (C). Examples of the filler include ground calcium carbonate, colloidal calcium carbonate, magnesium carbonate, diatomite, clay, talc, titanium oxide, fumed silica, precipitated silica, crystalline silica, molten silica, anhydrous silicic acid, hydrous silicic acid, carbon black, ferric oxide, aluminum fine powder, zinc oxide, activated zinc oxide, PVC powder, PMMA powder, glass fiber, filament, organic balloon, and inorganic balloon.

Use amount of the filler is, relative to 100 parts by weight of the polyoxyalkylene-based polymer (A), preferably 1 to 300 parts by weight, and more preferably 10 to 250 parts by weight.

### <Adhesiveness-imparting agent>

The curable composition may be added with an adhesiveness-imparting agent.

As for the adhesiveness-imparting agent, a silane coupling agent or a reaction product of a silane coupling agent can be added.

Specific examples of the silane coupling agent include amino group-containing silanes such as γ-aminopropyltrimethoxysilane, γ-aminopropylmethyldimethoxysilane, N-β-aminoethyl-γ-aminopropyltrimethoxysilane, N-β-aminoethyl-γ-aminopropylmethyldimethoxysilane, N-phenyl-γ-aminopropyltrimethoxysilane, or (2-aminoethyl)aminomethyltrimethoxysilane; isocyanate group-containing silanes such as γ-isocyanatopropyltrimethoxysilane, γ-isocyanatopropyltriethoxysilane, γ-isocyanatopropylmethyldimethoxysilane, α-isocyanate methyltrimethoxysilane, or α-isocyanate methyldimethoxymethylsilane; mercapto group-containing silanes such as γ-mercaptopropyltrimethoxysilane, γ-mercaptopropyltriethoxysilane, or γ-mercaptopropylmethyldimethoxysilane; and epoxy group-containing silanes such as γ-glycidoxypropyltrimethoxysilane or β-(3,4-epoxycyclohexyl)ethyltrimethoxysilane.

Only one type of the adhesiveness-imparting agent may be used, or two or more types of them may be used as a mixture. It is also possible to use a reaction product of various silane coupling agents.

Use amount of the silane coupling agent is, relative to 100 parts by weight of the polyoxyalkylene-based polymer (A), preferably 0.1 to 20 parts by weight, and particularly preferably 0.5 to 10 parts by weight.

### <Plasticizer>

The curable composition may be added with a plasticizer. Specific examples of the plasticizer include phthalic acid ester compounds such as dibutyl phthalate, diisononyl phthalate (DINP), diheptyl phthalate, di(2-ethylhexyl) phthalate, diisodecyl phthalate (DIDP), or butyl benzyl phthalate; terephthalic acid ester compounds such as bis(2-ethylhexyl)-1,4-benzene dicarboxylate; nonphthalic acid ester compounds such as 1,2-cyclohexane dicarbonic acid diisononyl ester; aliphatic polyhydric carbonic acid ester compounds such as dioctyl adipate, dioctyl sebacate, dibutyl sebacate, diisodecyl succinate, or tributyl acetyl citrate; unsaturated fatty acid ester compounds such as butyl oleate or methyl acetylricinoleate; alkylsulfonic acid phenyl ester (specifically, trade name: Mesamoll (manufactured by LANXESS)); phosphoric acid ester compounds; trimellitic acid ester compounds; chlorinated paraffin; hydrocarbon oils such as alkyl diphenyl or partially hydrogenated terphenyl; processed oils; epoxy plasticizers such as epoxidized soybean oil or benzyl epoxy stearate; and high molecular weight plasticizers such as vinyl-based polymer, polyester-based plasticizer, or polyether polyol.

Among the plasticizers described above, epoxy plasticizers are preferable from the viewpoint of a paint adhesion property.

Use amount of the plasticizer is, relative to 100 parts by weight of the polyoxyalkylene-based polymer (A), preferably 5 to 150 parts by weight, more preferably 10 to 120 parts by weight, and particularly preferably 20 to 100 parts by weight. If it is less than 5 parts by weight, the effect of a plasticizer is not exhibited, and if it is more than 150 parts by weight, the cured product has insufficient mechanical strength. The plasticizer may be used either singly or in combination of two or more types thereof.

### <Anti-oxidant>

In the curable composition, an anti-oxidant (anti-aging agent) can be used. Anti-weatherability of a cured product can be enhanced by using an anti-oxidant. Examples of the anti-oxidant include a hindered phenol-based, a monophenol-based, a bisphenol-based and a polyphenol-based. Specific examples of the anti-oxidant are described also in Japanese Unexamined Patent Application, Publication No. H4-283259 or Japanese Unexamined Patent Application, Publication No. H9-194731.

Use amount of the anti-oxidant is, relative to 100 parts by weight of the polyoxyalkylene-based polymer (A), preferably 0.1 to 15 parts by weight, and more preferably 1 to 10 parts by weight.

### <Photostabilizer>

In the curable composition, a photostabilizer can be used. Photooxidation deterioration of a cured product can be prevented by using a photostabilizer. Examples of the photostabilizer include benzotriazole-based, hindered amine-based, and benzoate-based compounds, but hindered amine-based compounds are particularly preferable.

Use amount of the photostabilizer is, relative to 100 parts by weight of the polyoxyalkylene-based polymer (A), preferably 0.1 to 10 parts by weight, and particularly preferably 0.2 to 5 parts by weight.

### <UV absorbing agent>

In the curable composition, an UV absorbing agent can be used. Surface anti-weatherability of a cured product can be enhanced by using an UV absorbing agent. Examples of the UV absorbing agent include benzophenone-based, benzotriazole-based, salicylate-based, substituted tolyl-based, and metal chelate-based compounds, but benzotriazole-based compounds are particularly preferable, and commercially available product names like Tinuvin P, Tinuvin 213, Tinuvin 234, Tinuvin 326, Tinuvin 327, Tinuvin 328, Tinuvin 329, and Tinuvin 571 (all manufactured by BASF) can be mentioned.

Use amount of the UV absorbing agent is, relative to 100 parts by weight of the polyoxyalkylene-based polymer (A), preferably 0.1 to 10 parts by weight, and particularly preferably 0.2 to 5 parts by weight.

### <Production of curable composition>

The curable composition is a curable composition which is cured by heating, and it is preferably produced as a one liquid component in which all formulation components are mixed.
The curable composition uses a catalyst which does not cure at room temperature even in the presence of moisture, and it is not necessary to be completely sealed, but, in the case of long term storage, it is preferably stored in a sealed container like cartridge. Furthermore, removal of moisture from formulation components and addition of a dehydrating agent, which are necessary for a case of using a catalyst that is cured at room temperature, are not required for the curable composition of the present invention. As described in the above, the curable composition does not substantially cure at room temperature. Specifically, it is preferable that the curable composition does not cure even when the curable composition right after the adjustment is stored for 1 week at 23°C in a sealed container.

### <Thermal curing>

The curable composition containing the polyoxyalkylene-based polymer (A) is cured by heating after application. The heating temperature is preferably 120°C or higher, more preferably 140°C or higher, even more preferably 160°C or higher, and most preferably 180°C or higher. When it is 160°C or higher, a cured product which is sufficiently cured within even shorter time can be obtained. Furthermore, when it is lower than 120°C, a cured product may not be obtained due to no curing. Furthermore, the upper limit of the heating temperature is preferably 250°C or lower. When it is higher than 250°C, thermal deterioration of a cured product may progress.

The heating time is, although not particularly limited, preferably 1 minute or longer and 5 hours or shorter, more preferably 2 minutes or longer and 2 hours or shorter, and even more preferably 5 minutes or longer and 1 hour or shorter.

As a method for heating, a conventionally well-known means like hot air drying and infrared drying is used.

### <Use>

As an application subject of the curable composition, a car body-component of an automobile, a car body-component of a large-sized vehicle such as truck or bus, a train·component of a railroad train, a component for an airplane, a component for a ship, a container, an electric · electronic component, home appliances, various mechanical components, and a building material like sash can be mentioned.

### EXAMPLES

Hereinbelow, specific explanations are given in view of examples of the method of the present invention, but the present invention is not limited by the examples.

Number average molecular weight and molecular weight distribution in the examples indicate GPC molecular weight and molecular weight distribution that are measured at the following conditions.

Liquid transport system: HLC-8220GPC manufactured by Tosoh Corporation
Column: TSK-GEL H type manufactured by Tosoh Corporation
Solvent: THF
Molecular weight: based on polystyrene
Measurement temperature: 40°C

The terminal group-converted molecular weight in the examples indicates the molecular weight which is obtained by measuring a hydroxy value according to the measurement method of JIS K 1557 and by measuring an iodine value according to the measurement method of JIS K 0070, and taking into consideration the structure of an organic polymer (branch level set by an employed polymerization initiator).

### (Synthesis example 1)

By using polyoxypropylene triol with number average molecular weight of about 3,000 as an initiator and zinc hexacyanocobaltate glyme complex as a catalyst, polymerization of propylene oxide was carried out to obtain polyoxypropylene (P-1) which has a hydroxyl group at the terminal, number average molecular weight of 16400 (terminal group-converted molecular weight: 12200), and molecular weight distribution Mw/Mn = 1.31. Relative to the hydroxyl group of the obtained polyoxypropylene (P-1) which has a hydroxyl group at the terminal, 1.2 molar equivalents of sodium methoxide were added as a 28% methanol solution. Methanol was distilled off by vacuum evaporation, and allyl chloride was added additionally in an amount of 1.5 molar equivalents relative to the hydroxyl group of the polymer (P-1) to convert the hydroxyl group at the terminal to an allyl group. Unreacted allyl chloride was removed by evaporation under reduced pressure. To 100 parts by weight of the obtained unpurified polyoxypropylene having an allyl group at the terminal, 300 parts by weight of n-hexane and 300 parts by weight of water were mixed and stirred, water was removed by centrifuge, 300 parts by weight of water were additionally mixed and stirred with the obtained hexane solution, water was removed again by centrifuge, and hexane was removed by evaporation under reduced pressure. According to the above, polyoxypropylene polymer (Q-1) which has an allyl group at the terminal site was obtained. To 500 g of the polymer (Q-1), 25 µl of platinum divinyl disiloxane complex solution were added, and, under stirring, 14.6 g of triethoxysilane were slowly added dropwise thereto. After the reaction for 2 hours at 90°C, unreacted triethoxysilane was distilled off under reduced pressure to obtain polyoxypropylene (A-1) which has a triethoxysilyl group at the terminal and number average molecular weight of about 16400. It was found that the polymer (A-1) has 2.2 triethoxysilyl groups on average in one molecule.

### (Synthesis example 2)

To 500 g of the polyoxypropylene polymer (Q-1) having an allyl group at the terminal site which has been obtained from Synthesis example 1, 25 µl of platinum divinyl disiloxane complex solution were added, and, under stirring, 8.9 g of dimethoxymethylsilane were slowly added dropwise thereto. After the reaction for 2 hours at 100°C, unreacted dimethoxymethylsilane was distilled off under reduced pressure to obtain polyoxypropylene (A'-1) which has a dimethoxymethylsilyl group at the terminal and number average molecular weight of about 16400. It was found that the polymer (A'-1) has 2.1 dimethoxymethylsilyl groups on average in one molecule.

### (Synthesis example 3)

To 100 parts by weight of polyoxypropylene (A-1) having a triethoxysilyl group which has been obtained from Synthesis example 1, 15 parts by weight of methanol and 18 ppm of 35 wt% of aqueous hydrochloric acid solution were added and then reacted for 1 hour at 70°C. Thereafter, epoxidized soy bean oil (manufactured by New Japan Chemical Co., Ltd., SANSO CIZER E-2000H) was added in an amount of 900 ppm, and stirred for 1 hour at 90°C. Methanol was evaporated from the obtained methanol solution under reduced pressure to obtain polyoxypropylene (A'-2) which has a trimethoxysilyl group at the terminal and number average molecular weight of about 16400.
It was found that the polymer (A'-2) has 2.2 trimethoxysilyl groups on average in one molecule.

### Example 1

By using a planetary mixer, 100 parts by weight of polymer (A-1) shown in Table 1 were homogeneously mixed with 5 parts by weight of IRGANOX245 (manufactured by BASF Japan, hindered phenol-based antioxidant), 40 parts by weight of Sanso Cizer E-PS (manufactured by New Japan Chemical Co., Ltd.: di 2-ethylhexyl 4,5-epoxyhexahydrophthalic acid), 10 parts by weight of PPG3000 (manufactured by Takeda Pharmaceutical Company Limited., trade name: Actcol P-23), 160 parts by weight of Neolight SP (manufactured by TAKEHARA KAGAKU KOGYO CO., LTD.: precipitated calcium carbonate), 54 parts by weight of LM2200 (manufactured by MARUO CALCIUM CO., LTD.: ground calcium carbonate), 0.2 parts by weight of Hi-Black 10 (manufactured by Orion Engineered Carbons; carbon black), and 4 parts by weight of SCAT-24 (manufactured by NITTO KASEI CO., LTD.: monobutyl tin tris(2-ethylhexanoate)). The obtained curable composition was sealed in a cartridge. The following evaluation was carried out by using the obtained curable composition.

### (Storage stability)

The obtained cartridge was stored for 1 week at 23°C or for 2 weeks at 50°C, and then the state of the curable composition was determined. The cartridge was mounted on a commercially available hand gun, and when the composition is extruded without any problem, it was found to be "not cured", while no extrusion of the composition was found to be "cured".

### (Curability)

The curable composition from the cartridge which has been stored for 1 week at 23°C was filled in an ointment container (depth of 4.5 mm and diameter of 46 mm), and aged for 30 minutes in a dryer of which temperature has been adjusted to the temperature shown in Table 1, and then the curing state was determined by finger touching and a hardness meter (Asker A type). Furthermore, the cured product was cut using a cutter, and the curing state inside the cured product was examined, and if there is a fluid part inside the cured product, it was found to be "non-cured".

### (Heat resistant foaming test)

The obtained curable composition was applied in a size of 20 mm × 120 mm × 5 mm (thickness) on an aluminum plate. The curable composition applied on aluminum was aged for a time period described in Table 1 under an environment of 23°C/50% RH, immediately thereafter aged for 1 hour in a dryer which has been adjusted to 180°C, and then taken out followed by cooling for 10 minutes. The foaming state of the cured product was observed with a naked eye, and the presence or absence of foaming was determined. A state in which there is no foaming like blisters on a surface of a cured product and not even a small foam is present inside the cured product is graded "Good", a case in which wrinkles or blisters are not present on a surface of a cured product even though there is a small foam present inside the cured product is graded "Fair", and a state in which wrinkles or blisters are present on a surface of a cured product is graded "Bad".
The results are shown in Table 1.

### (Heat resistant deterioration test)

The obtained curable composition was applied in a size of 20 mm × 120 mm × 5 mm (thickness) on an aluminum plate. The curable composition applied on aluminum was aged for 20 minutes under an environment of 23°C/50% RH, immediately thereafter aged for 1 hour in a dryer which has been adjusted to 180°C, and then taken out followed by cooling for 10 minutes. Surface of a cured product was examined, and, when no deterioration is confirmed, it is graded "Good", and when a solid part resulting from deterioration in part of a cured product is confirmed, it is graded "Bad".

### (Paint adhesion property)

The obtained curable composition was applied to have a thickness of 3 mm, aged for 20 minutes at 23°C (relative humidity of 50%), and thermally cured for 1 hour at 180°C. On a surface of a cured product of the curable composition, an epoxy-based primer was applied, and then immediately aged for 25 minutes in a dryer at 100°C. After taking it out from the dryer, it was brought back to room temperature (23°C), and based on a cross-cut method described in JIS K5600 and/or a checkerboard square test method described in Old JIS K5400, a checkerboard square test (25 square boxes) with an interval of 2 mm was carried out by using cellophane tape manufactured by NICHIBAN CO., LTD. The evaluation was expressed in terms of the number of squares (number of square boxes) in which residual primers are present relative to the number of entire checkerboard squares (25 square boxes). The results are shown in Table 1.

### Example 2

The curable composition was obtained in the same manner as Example 1 except that 40 parts by weight of CML#35 (manufactured by Ohmi Chemical Industry Co., Ltd.: calcium carbonate) are additionally added. Furthermore, evaluation of the curable composition was carried out in the same manner as Example 1. The results are shown in Table 1.

### Example 3

The curable composition was obtained in the same manner as Example 1 except that SCAT-24 is changed to 2 parts by weight. Furthermore, evaluation of the curable composition was carried out in the same manner as Example 1. The results are shown in Table 1.

### Example 4

The curable composition was obtained in the same manner as Example 1 except that SCAT-24 is changed to 1 part by weight. Furthermore, evaluation of the curable composition was carried out in the same manner as Example 1. The results are shown in Table 1.

### Example 5

The curable composition was obtained in the same manner as Example 1 except that SCAT-24 is changed to 0.75 parts by weight. Furthermore, evaluation of the curable composition was carried out in the same manner as Example 1. The results are shown in Table 1.

### Comparative example 1

The curable composition was obtained in the same manner as Example 1 except that the polymer is changed to A'-1. As a result of determining the state of the curable composition after storing it for 1 week at 23°C, the curable composition has been already cured, and thus evaluation cannot be made.

### Comparative example 2

The curable composition was obtained in the same manner as Example 1 except that the polymer is changed to A'-2. As a result of determining the state of the curable composition after storing it for 1 week at 23°C, the curable composition has been already cured, and thus evaluation cannot be made.

### Comparative example 3

The curable composition was obtained in the same manner as Example 1 except that the catalyst is changed to 2 parts by weight of U-220H (manufactured by NITTO KASEI CO., LTD.: dibutyl tin bisacetylacetonate). As a result of determining the state of the curable composition after storing it for 1 week at 23°C, the curable composition has been already cured, and thus evaluation cannot be made.

**[Table 1]**

| | | | Ex. 1 | Ex. 2 | Ex. 3 | Ex. 4 | Ex. 5 | Comp. Ex. 1 | Comp. Ex. 2 | Comp. Ex. 3 |
|---|---|---|---|---|---|---|---|---|---|---|
| Polyoxyalkylene-based polymer | A-1 | Component (A) | 100 | 100 | 100 | 100 | 100 | | | 100 |
| | A'-1 | | | | | | | 100 | | |
| | A'-2 | | | | | | | | 100 | |
| Anti-oxidant | IR245 | | 5 | 5 | 5 | 5 | 5 | 5 | 5 | 5 |
| Plasticizer | Sanso Cizer | | 40 | 40 | 40 | 40 | 40 | 40 | 40 | 40 |

| | E-PS | | | | | | | | | |
|---|---|---|---|---|---|---|---|---|---|---|
| | PPG3000 | | 10 | 10 | 10 | 10 | 10 | 10 | 10 | 10 |
| Calcium carbonate | Neolight SP | | 160 | 160 | 160 | 160 | 160 | 160 | 160 | 160 |
| | IM2200 | | 54 | 54 | 54 | 54 | 54 | 54 | 54 | 54 |
| Carbon black | Hi-Black 10 | | 0.2 | 0.2 | 0.2 | 0.2 | 0.2 | 0.2 | 0.2 | 0.2 |
| Calcium oxide | CML#35 | Component (C) | | 40 | | 40 | 40 | | | |
| Catalyst | SCAT-24 | Component (B) | 4 | 4 | 2 | 1 | 0.75 | 4 | 4 | |
| | U-220H | | | | | | | | | 2 |
| Storage stability | 23°C, after 1 week | | Not cured | Not cured | Not cured | Not cured | Not cured | Cured | Cured | Cured |
| | 50°C, after 2 week | | Cured | Cured | Not cured | Not cured | Not cured | Cured | Cured | Cured |
| Curability | 90°C, after heating for 30 min. | | Not cured | *1 | *1 | *1 | *1 | *2 | *2 | *2 |
| | 150°C, after heating for 30 min. | | Cured (Harness 4) | *1 | *1 | *1 | *1 | | | |
| | 180°C, after heating for 30 min. | | Cured (Hardness 20) | Cured | Cured | Cured | Cured | | | |
| Heat resistant foaming test | 23°C*20min. 180°C*1Hr | | Good | Good | Good | Good | Good | | | |
| | 23°C*40min. 180°C*1Hr | | Good | Good | *1 | *1 | *1 | | | |
| | 23°C*2Hr 180°C*1Hr | | Fair | Good | *1 | *1 | *1 | | | |
| | 23°C*7Hr 180°C*1Hr | | Bad | Good | *1 | *1 | *1 | | | |
| Heat resistant deterioration test | 23°C*20min. 180°C*1Hr | | Good | Good | Good | Good | Good | | | |
| | 23°C*7-8Hr 180°C*1Hr | | Good | Good | *1 | *1 | *1 | | | |
| Paint adhesion property (Checkboard square test) | | | 25/25 | 25/25 | 0/25 | 0/25 | 0/25 | | | |

| | | | | | | | | | | |
|---|---|---|---|---|---|---|---|---|---|---|
| *1: Not measured *2: Unable to evaluate | | | | | | | | | | |

All of the curable composition of Comparative example 1 containing polymer A'-1 which has a dimethoxysilyl group as a hydrolyzable silyl group, the curable composition of Comparative example 2 containing polymer A'-2 which has a trimethoxysilyl group as a hydrolyzable silyl group, and the curable composition of Comparative example 3 containing dibutyl tin bisacetylacetonate as a catalyst cured at room temperature. On the contrary, the curable compositions of Examples 1 to 5 did not cure even after the storage for 1 week at 23°C, and thus they were found to have good storage stability. Furthermore, Examples 1 and 2 in which the addition amount of the component (B) is 4 parts by weight showed an enhanced paint adhesion property. Furthermore, if calcium oxide is added as the component (C), no foaming was shown even when the curable composition is heated at high temperature after being applied and aged for a long period of time at room temperature. Meanwhile, in Examples 3 to 5, when the amount of the component (B) is 2 parts by weight, 1 part by weight, or 0.75 parts by weight, it remained not-cured even after the storage for 2 weeks at 50°C, thus indicating enhanced storage stability.

## Claims

1. A thermosetting type curable composition comprising 100 parts by weight of a polyoxyalkylene-based polymer (A) and 0.5 to 6 parts by weight of tetravalent monoalkyl tin (B), wherein the polyoxyalkylene-based polymer (A) has a hydrolyzable silyl group that is represented by the general formula (1):
-Si(OR¹)₃ (1)
wherein R¹s each independently represent a hydrocarbon group having 2 to 6 carbon atoms.

2. The thermosetting type curable composition according to claim 1, further comprising 5 to 200 parts by weight of calcium oxide (C).

3. The thermosetting type curable composition according to claim 1 or 2, wherein the tetravalent monoalkyl tin (B) is 3 to 5 parts by weight.

4. The thermosetting type curable composition according to claim 1 or 2, wherein the tetravalent monoalkyl tin (B) is 0.5 to 3 parts by weight.

5. The thermosetting type curable composition according to any one of claims 1 to 4, wherein the tetravalent monoalkyl tin (B) is monobutyl tin carboxylate.

6. The thermosetting type curable composition according to any one of claims 1 to 5, wherein R¹ in the general formula (1) is an ethyl group.

7. The thermosetting type curable composition according to any one of claims 1 to 6, wherein the curable composition is not curable when the curable composition right after production is kept in a sealed container for 1 week at 23°C.

8. The thermosetting type curable composition according to any one of claims 1 to 7, wherein the curable composition cures at 120°C or higher.

9. The thermosetting type curable composition according to any one of claims 1 to 7, wherein the curable composition cures at 160°C or higher.

10. A method for producing a cured product comprising thermal curing by heating the thermosetting type curable composition according to any one of claims 1 to 7 at 120°C or higher

11. A method for producing a cured product comprising thermal curing by heating the thermosetting type curable composition according to any one of claims 1 to 7 at 160°C or higher.

## Patentansprüche

1. Eine härtbare Zusammensetzung des wärmehärtbaren Typs, umfassend 100 Gewichtsteile eines Polymers auf Polyoxyalkylen-Basis (A) und 0,5 bis 6 Gewichtsteile vierwertiges Monoalkylzinn (B), wobei das Polymer auf Polyoxyalkylen-Basis (A) einen hydrolysierbaren Silylrest aufweist, der durch die allgemeine Formel (1) dargestellt ist:
-Si(OR¹)₃ (1)
wobei die R¹ jeweils unabhängig einen Kohlenwasserstoffrest mit 2 bis 6 Kohlenstoffatomen darstellen.

2. Die härtbare Zusammensetzung des wärmehärtbaren Typs nach Anspruch 1, weiter umfassend 5 bis 200 Gewichtsteile Calciumoxid (C).

3. Die härtbare Zusammensetzung des wärmehärtbaren Typs nach Anspruch 1 oder 2, wobei das vierwertige Monoalkylzinn (B) 3 bis 5 Gewichtsteile beträgt.

4. Die härtbare Zusammensetzung des wärmehärtbaren Typs nach Anspruch 1 oder 2, wobei das vierwertige Alkylzinn (B) 0,5 bis 3 Gewichtsteile beträgt.

5. Die härtbare Zusammensetzung des wärmehärtbaren Typs nach einem der Ansprüche 1 bis 4, wobei das vierwertige Monoalkylzinn (B) Monobutylzinncarboxylat ist.

6. Die härtbare Zusammensetzung des wärmehärtbaren Typs nach einem der Ansprüche 1 bis 5, wobei R¹ in der allgemeinen Formel (1) ein Ethylrest ist.

7. Die härtbare Zusammensetzung des wärmehärtbaren Typs nach einem der Ansprüche 1 bis 6, wobei die härtbare Zusammensetzung nicht härtbar ist, wenn die härtbare Zusammensetzung direkt nach der Herstellung für 1 Woche bei 23°C in einem verschlossenen Behälter gehalten wird.

8. Die härtbare Zusammensetzung des wärmehärtbaren Typs nach einem der Ansprüche 1 bis 7, wobei die härtbare Zusammensetzung bei 120°C oder höher aushärtet.

9. Die härtbare Zusammensetzung des wärmehärtbaren Typs nach einem der Ansprüche 1 bis 7, wobei die härtbare Zusammensetzung bei 160°C oder höher aushärtet.

10. Ein Verfahren zur Herstellung eines gehärteten Produkts, umfassend thermisches Härten durch Erwärmen der härtbaren Zusammensetzung des wärmehärtbaren Typs nach einem der Ansprüche 1 bis 7 bei 120°C oder höher.

11. Ein Verfahren zur Herstellung eines gehärteten Produkts, umfassend thermisches Härten durch Erwärmen der härtbaren Zusammensetzung des wärmehärtbaren Typs nach einem der Ansprüche 1 bis 7 bei 160°C oder höher.

## Revendications

1. Composition durcissable du type thermodurcissable comprenant 100 parties en poids d'un polymère à base de polyoxyalkylène (A) et 0,5 à 6 parties en poids d'un monoalkyl-étain tétravalent (B), dans laquelle le polymère à base de polyoxyalkylène (A) a un groupe silyle hydrolysable qui est représenté par la formule générale (1) :
-Si(OR¹)₃ (1)
dans laquelle chaque R¹ représente indépendamment un groupe hydrocarboné ayant 2 à 6 atomes de carbone.

2. Composition durcissable du type thermodurcissable selon la revendication 1, comprenant en outre 5 à 200 parties en poids d'oxyde de calcium (C).

3. Composition durcissable du type thermodurcissable selon la revendication 1 ou 2, dans laquelle le monoalkyl-étain tétravalent (B) représente 3 à 5 parties en poids.

4. Composition durcissable du type thermodurcissable selon la revendication 1 ou 2, dans laquelle le monoalkyl-étain tétravalent (B) représente 0,5 à 3 parties en poids.

5. Composition durcissable du type thermodurcissable selon l'une quelconque des revendications 1 à 4, dans laquelle le monoalkyl-étain tétravalent (B) est le carboxylate de monobutyl-étain.

6. Composition durcissable du type thermodurcissable selon l'une quelconque des revendications 1 à 5, dans laquelle R¹ dans la formule générale (1) est un groupe éthyle.

7. Composition durcissable du type thermodurcissable selon l'une quelconque des revendications 1 à 6, laquelle composition durcissable n'est pas durcissable quand la composition durcissable juste après production est maintenue dans un récipient scellé pendant 1 semaine à 23°C.

8. Composition durcissable du type thermodurcissable selon l'une quelconque des revendications 1 à 7, laquelle composition durcissable durcit à 120°C ou plus.

9. Composition durcissable du type thermodurcissable selon l'une quelconque des revendications 1 à 7, laquelle composition durcissable durcit à 160°C ou plus.

10. Méthode pour produire un produit durci, comprenant le durcissement thermique par chauffage de la composition durcissable du type thermodurcissable de l'une quelconque des revendications 1 à 7 à 120°C ou plus .

11. Méthode pour produire un produit durci, comprenant le durcissement thermique par chauffage de la composition durcissable du type thermodurcissable de l'une quelconque des revendications 1 à 7 à 160°C ou plus.
